# EUROPEAN PATENT SPECIFICATION

(11) **EP 1 871 173 B1**
(45) Date of publication and mention of the grant of the patent: **15.02.2017**
(21) Application number: 06724147.1
(22) Date of filing: 07.04.2006
(51) Int. Cl.: A23F 5/02, A23F 5/14

(54) **COFFEE PRODUCT**
KAFFEEPRODUKT
PRODUIT A BASE DE CAFE

(30) Priority: 12.04.2005 EP 05102862
(43) Date of publication of application: 02.01.2008
(73) Proprietor: Nestec S.A., 1800 Vevey (CH)
(72) Inventor: LELOUP, Valérie, Martine, Jeanine, CH-1350 Orbe (CH); PARCHET, Jean-Michel, CH-1350 Orbe (CH); LIARDON, Rémy, CH-1010 Lausanne (CH)
(74) Representative: Lomholt, Stig Bredsted
(86) International application number: PCT/EP2006/003209
(87) International publication number: WO 2006/108578

(56) References cited:
- EP-A- 0 299 106
- WO-A-02/41700
- WO-A-87/04598
- CH-A- 523 023
- GB-A- 874 481
- US-A- 5 322 703
- US-A1- 2004 005 398
- US-A1- 2004 151 822

## Description

### Field of the Invention

The present invention relates to a coffee product comprising roasted and unroasted portions, a method of preparing such a coffee product as well as the use of the product to provide certain desirable consumer benefits.

### Background of the Invention

It is known that coffee is a complex mixture of many hundreds of compounds, which, in combination, form a unique and pleasing aroma and taste desired by many consumers. Furthermore, coffee is consumed not only for its desirable flavour but often for other reasons, such as to increase short term mental alertness. The positive health impact of coffee has been studied over many decades and, for a long time, it has been known that certain of these coffee compounds are capable of providing benefits to the consumer, especially greater mental alertness through the ingestion of caffeine. However, it is less well known to consumers that certain coffee compounds are excellent anti-oxidants and that, weight for weight, coffee can potentially provide significantly more antioxidants to the consumer than, for example, a well known source of antioxidants such as green tea.

A very important source of anti-oxidants that has been identified in coffee is the class known as chlorogenic acids.

Chlorogenic acids in coffee are mainly mono- and di-esters of quinic acid and phenolic groups (e.g. caffeic, ferulic, coumaric, methoxycinnamic) attached to different positions. These chlorogenic acids have been shown to have antioxidant activity *in vitro* (e.g. radical scavenging, LDL oxidation resistance, DNA damage protection) and antimutagenic effect *in vivo* on large intestine, liver and tongue in rats and hamsters. Additionally chlorogenic acids are able to reduce systemic acid secretion in the stomach protecting the gastric mucosa against irritations possibly responsible for heartburn.

From the health and nutritional perspective, it is desirable that consumers should be able to benefit from the positive health aspects of coffee identified above and so it would be highly advantageous to maximise the amount of chlorogenic acids available in coffee products.

Conventional coffee process methods, where all of the beans that contribute to an end product are roasted, are well known. However, it has been found that the roasting process degrades a significant amount of the chlorogenic acids present prior to roasting. Nevertheless, the achievement of desirable "roasty" coffee flavour is of such importance to consumers, that it has hitherto been necessary to roast the beans to a significant degree with the knowledge that this will cause undesirable degradation of certain beneficial compounds.

In particular, it has been found that the natural chlorogenic acid content of green coffee can be reduced by as much as about 40 to 90% by weight during conventional roasting processes.

WO 87/04598 and EP0299106 discloses methods of adding chlorogenic acid to roasted coffee either as the pure substance or in the form of an extract of green coffee.

CH 523023A discloses a method of reducing the content of chlorogenic acid of green and/or roasted coffee by use of a sorbent.

Therefore, it is highly desirable to provide a coffee product, which both retains a much higher level of chlorogenic acids than traditionally associated with roasted coffee but which nevertheless provides an acceptable or even more desirable roasted coffee flavour. Ideally, the coffee product should at least provide organoleptic properties desired by the consumer and/or avoid or minimise any undesirable organoleptic properties.

In WO-A1-02/41700, the mixing of roasted and green coffee beans is discussed. However, the green and roasted coffee batches are ground together and processed in such a way as to deliver a product not having significantly increased levels of chlorogenic acids.

In view of the foregoing, the present invention seeks to provide one or more of the abovementioned benefits and/or to address one or more of the abovementioned problems.

### Summary of the Invention

Accordingly, the present invention provides a coffee product comprising:
(i) a first portion consisting of unroasted ground and/or unground coffee, in an amount of from 1 to 90% by weight based on the total weight of the coffee product, and
(ii) a second portion consisting of ground coffee which has been roasted to a higher degree of roast than said first portion, in an amount of from 99 to 10% by weight based on the total weight of the coffee product,
wherein the chlorogenic acids are present in an amount of at least 4g per 100g of the coffee product.

In a further aspect the invention provides the use of a coffee product as defined herein to provide increased amount of natural bio-available antioxidants to the body when consumed.

The invention further provides a method (hereinafter referred to as "method 1 ") of preparing a soluble coffee product comprising the steps of:
(A) providing a first portion consisting of unroasted coffee, in an amount of from 1 to 90% by weight based on the total weight of the coffee product,
(B) optionally grinding the first portion,
(C) providing a second portion consisting of coffee which has been roasted to a higher degree of roast than said first portion, in an amount of from 99 to 10% by weight based on the total weight of the coffee product,
(D) grinding the second portion,
(E) optionally stripping the aroma from the second portion to provide a first aroma portion and a stripped second portion,
(F) mixing the first portion together with the second ground portion or optionally the stripped second portion,
(G) co-extracting the first and second portions to form an extract, and
(H) optionally stripping the aroma from the extract,
(I) optionally adding the first aroma portion to the optionally stripped, combined extract
(J) optionally drying the extract,
so as to provide a soluble coffee composition having a content of chlorogenic acids of at least 8g per 100g of the coffee product, based on an extraction level providing a Total solids (Ts) content of 50% by weight of the coffee product.

It has been found that such a process provides the desired high levels of chlorogenic acids and a much improved aroma in the final product.

Although stripping of the various extracts is optional, it is highly desirable to perform these steps since this allows significantly greater control over the final aroma than hitherto has been achievable. Thus, it can advantageously enable the provision of a coffee product, which is more readily tailored to the different taste and aroma profiles desired by consumers in different markets.

In a further aspect, the invention provides a method (hereinafter referred to as "method 2") of preparing a soluble coffee product comprising the steps of:
(A) providing a first portion consisting of unroasted coffee,
(B) optionally grinding the first portion,
(C) extracting the first portion to provide a first extract,
(D) optionally drying the first portion,
(E) providing a second portion consisting of coffee which has been roasted to a higher degree of roast than said first portion,
(F) grinding the second portion,
(G) optionally stripping the aroma from the second portion to provide a first aroma portion and a stripped second portion,
(H) extracting the optionally stripped second portion to provide a second extract,
(I) optionally drying the second portion,
(J) combining the first and second portions in the stoechiometric proportions of extracts so that the initial combined coffee blend would have been composed of 1 to 90% by weight of unroasted ground or/and unground coffee and 99 to 10% by weight of roasted ground coffee,
(K) optionally stripping the aroma from the combined extract,
(L) optionally adding the first aroma portion to the, optionally stripped, combined extract, and
(M) optionally drying the extract,
so as to provide a soluble coffee product having a content of chlorogenic acids in an amount of at least 8g per 100g of the coffee product, based on an extraction level of 50% by weight of Total solids (Ts).

Whilst optional, the stripping steps are highly desirable for the reasons given above.

In yet a further aspect, the invention provides a method (hereinafter referred to as "method 3") of preparing a fully or partially decaffeinated soluble coffee product comprising the steps of:
(A) providing a first portion consisting of unroasted decaffeinated coffee, in an amount of from 1 to 90% by weight based on the total weight of the coffee product composition,
(B) optionally grinding the first portion
(C) providing a second portion consisting of coffee, optionally decaffeinated which has been roasted to a higher degree of roast than said first portion, in an amount of from 99 to 10% by weight based on the total weight of the coffee product composition,
(D) grinding the second portion,
(E) carrying out steps (E) to (J) of method 1 or steps (F) to (M) of method 2.

It has been found that such a process provides the desired high levels of chlorogenic acids, a reduction or removal of caffeine level and a much improved aroma in the final product.

### Detailed Description of the Invention

The present invention provides a coffee product which depends upon the blending of coffee beans, a portion of which are roasted and portion of which are unroasted or green so as to provide a coffee beverage, which, when reconstituted with water and consumed, has a pleasing taste and aroma and which delivers a significantly higher level of antioxidants, in the form of chlorogenic acids, to the body.

Chlorogenic acids have the general formula:

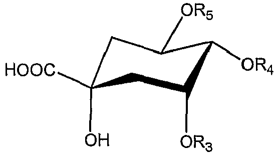

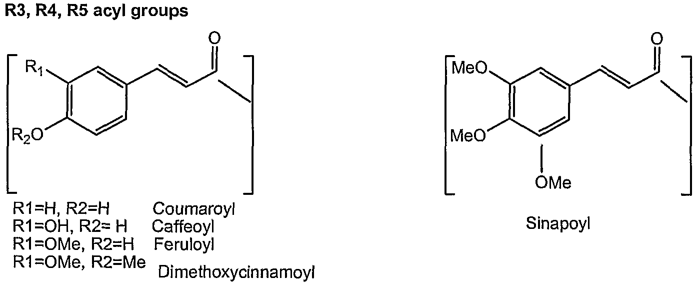

The most prevalent chlorogenic acids are given in the following table.

| Name | Structure | R3 | R4 | R5 |
|---|---|---|---|---|
| **Chlorogenic acids** | | | | |
| 5-*O*- caffeoyl-D-quinic acid (5CQA) | C | H | H | caffeoyl |
| 4-*O*- caffeoyl-D-quinic acid (4CQA) | C | H | caffeoyl | H |
| 3-*O*- caffeoyl-D-quinic acid (3CQA) | C | caffeoyl | H | H |

Other isomers exist which also fall within the definition of the structure given above. Therefore, in the context of the present invention, the phrase "chlorogenic acids" denotes all chlorogenic acid isomers, which are defined by the aforementioned structure.

In one aspect of the present invention, the coffee product is derived from a mixture of green and roasted coffee beans in which the weight ratio of the green portion and roasted portion in the coffee product is from 1:99 to 90:10, preferably from 30:70 to 50:50, more preferably from 35:65 to 45:55, most preferably from 37:63 to 42:58.

Where the ratio is below 1:99, the amount of chlorogenic acid present in the product is found to be insufficient to provide an effective amount of bio-available antioxidants.

Where the weight ratio of green bean to roasted bean in the product exceeds 60:40, it has been found that the product may be perceived as having an undesirable organoleptic profile, mainly due to a weakening of the roasted notes. Of course, it may be possible to compensate for this by darkening the roast level of the roasted portion. In this case, the weight ratio of the green bean portion to the roasted bean portion is less critical and could potentially be as high as 90:10.

Nevertheless, in order to provide a balance of acceptable taste with sufficiently high levels of chlorogenic acid in the product, the inventors have found that the weight ratio is most preferably between 35:65 to 45:55, or even 37:63 to 42:58 because, when moving away from these ratio ranges, there is considered to be a disproportionate reduction in one of the desirable benefits when compared to the improvement in the other benefit.

The content of chlorogenic acids in the coffee product is at least at least 4g per 100g of product, more preferably at least 5g, even more preferably at least 6g, most preferably at least 8g, e.g. at least 9g.

The green coffee portion may be a blend of green Arabica and green Robusta beans. However, it is particularly preferred that the green coffee portion is substantially or wholly derived from Robusta coffee beans.

Thus, preferably at least 65%, more preferably 75%, even more preferably 85%, most preferably 95%, e.g. 100% by weight of the green coffee beans are Robusta. This is because it has been found that Robusta coffee beans provide a greater level of chlorogenic acid per gram of bean than Arabica beans.

The roasted coffee portion may be a blend of Arabica and Robusta, although it is particularly preferred that the roasted portion is substantially or wholly derived from Arabica beans. This is because Arabica provides a richer taste and aroma profile, which is associated with coffee of higher quality.

The green coffee portion and/or the roasted coffee portion may be at least partially decaffeinated. This is to provide products the caffeine level of which can be modulated from caffeine-free to regular caffeine level. However, it is particularly preferred that the green coffee portion is from decaffeinated coffee.

Preferably the coffee product is used to provide a soluble coffee product.

Soluble coffee, or instant coffee as it is otherwise known, is very well known and has been produced commercially for many decades. It is produced from roast and ground coffee in a variety of ways, all of which are well known to the person skilled in the art.

Typically a first, though optional, step involves the stripping of the most volatile aroma components from coffee, which has previously been roast and ground.

Any suitable method for stripping can be used, though a particularly preferred method is disclosed in EP-A-1078576.

Following stripping, the less volatile components are then subjected to an "extraction" step. Extraction is a term common in the art of processing soluble coffee and indicates a process where water and/or steam are used to extract a complex mixture of coffee components from the roasted, ground coffee bean.

After extraction, the product may undergo a concentration step, following which, if a stripping step has taken place, the stripped aroma is reintroduced into the resulting extract.

Finally, the aromatised extract is usually dried according to any standard procedure, such as freeze-drying, spray-drying or agglomerating.

This produces a solid soluble product which may suitably be in the form of a powder or granules.

The soluble coffee mixture may be produced by co-extraction of the green portion and the roasted portion.

Alternatively, the soluble coffee product can be produced by separately providing a roasted coffee portion and a green coffee portion and then extracting them individually before combining the resultant extracts. This is advantageous as the extraction conditions can be adapted to suit roasted and unroasted beans respectively.

It is to be understood that where the coffee product of the invention is used in a soluble coffee product, the extraction process, explained herein, will increase the concentration of chlorogenic acids present. Therefore, in such a product, the content of chlorogenic acids is defined at a notional extraction level of 50% total solids extracted since, at higher or lower extraction levels, the content of chlorogenic acid will increase or decrease respectively.

Thus, in a soluble coffee product, the content of chlorogenic acid is at least 8g per 100g of the coffee product, based on an extraction level of 50% by weight of total solids, more preferably 10g, most preferably 12g per 100g of soluble coffee product.

It has also been found that the coffee product of the invention has other benefits. For instance, arabinogalactans are present in green coffee.

Arabinogalactans are a family of polysaccharides (proteoglycans) involved in plant growth and development. They are found in higher plants and occur in many different tissues, such as on the plasma membrane, in the cell wall and in the extracellular matrix.

Arabinogalactans typically have molecular weights, which vary from 10 kDa to 4000 kDa. They typically contain less than 10wt% protein, which is normally composed mainly of proline/hydroxyproline, alanine, serine, and threonine. More than 90wt% of arabinogalactans consists of polysaccharides, composed mainly of β-(1-3)-galactan chains with β-(1-6)-galactosyl side chains terminated primarily with arabinosyl residues.

Importantly, arabinogalactans deliver prebiotic benefits to the body when ingested.

In order to make the arabinogalactans available to the body, the green coffee portion is preferably ground, since this allows the arabinogalactans to be extracted therefrom.

It may also be desirable to incorporate into the coffee product additional arabinogalactans that have been isolated from green or roasted coffee. Suitable processes for isolating arabinogalactans are set out in WO 2005/116083, incorporated herein by reference.

Thus, in the present invention, arabinogalactans present in the ground green coffee portion, optionally together with arabinogalactans incorporated from another source into the coffee product, can be used to provide prebiotic benefits to the body when the coffee product is consumed.

The present invention is particularly suitable for use as a soluble coffee product or any product, which is based on or derived from a soluble coffee product.

For instance, the coffee product may also be used in so-called ready-to-drink beverages. Examples of ready-to-drink beverages for which the product of the present invention are suited include two-in-one beverages which comprise a coffee component together with a natural or artificial sweetener component, the components optionally being pre-diluted with a liquid such as water or milk. In this case, the coffee component can comprise the coffee product of the present invention.

Three-in-one beverages, which comprise coffee, a sweetener and a whitener such as milk, a liquid creamer or a solid (e.g. powdered) creamer, may comprise the coffee product of the present invention.

Furthermore, any beverage, which comprises soluble coffee as an ingredient, may comprise the coffee product of the present invention.

Additionally, the present invention can be used as an ingredient for standard brew, espresso, coffee-based beverage preparations to be used as bulk or in single beverage portion for in-home preparation.

### Examples

In the following examples, all amounts are percentage by weight unless otherwise stated.

### Example 1

Soluble coffee products were produced as follows:
Arabica and/or Robusta beans were medium roasted (CTN 80) and mixed with green Arabica and/or green Robusta beans. The beans were then ground and extracted according to standard methods. The resulting product was then dried to provide a soluble coffee product. These products were compared to traditional soluble coffee products derived wholly from either roasted Arabica and/or Robusta beans. See table 1.

The chlorogenic acid isomers were separated by high pressure liquid chromatography and detected by UV photometry. Antioxidant activity of chlorogenic acid isomers was evaluated in sequence by measuring the radical scavenging ability of the product using stable free radicals (ABTS). The total antioxidant activity was obtained from the summation of antoxidative activity of individual chlorogenic acid isomers. The antioxidant activity is given in "chlorogenic acid equivalents" (g/100g of the powdered product). The results are given in Table 1.

**Table 1**

| **Sample** | **Coffee Product (weight ratio of green:roasted)** | **Green coffee** | **Roasted Coffee (CTN 80)** | **Chlorogenic acids equivalent** |
|---|---|---|---|---|
| 1 | 0:100 | - | Arabica | 3.4 |
| 2 | 20:80 | Arabica | Arabica | 5.3 |
| 3 | 35:65 | Arabica | Arabica | 7.8 |
| 4 | 50:50 | Arabica | Arabica | 9.4 |
| 5 | 0:100 | - | Robusta | 2.2 |
| 6 | 35:65 | Robusta | Robusta | 7.2 |
| 7 | 0:100 | - | 50/50 Mix | 2.9 |
| 8 | 35:65 | 77/23 Mix* | 50/50 Mix | 7.2 |
| 9 | 35:65 | Robusta | Robusta | 8.3 |

| | | | | |
|---|---|---|---|---|
| * denotes 77% Arabica / 23% Robusta. | | | | |

### Example 2

Soluble coffee products were prepared as follows:
Arabica and/or Robusta beans were roasted to various degrees and mixed with green Arabica and/or green Robusta beans. The beans were then ground and extracted using conventional techniques. The resulting products were dried to provide a soluble coffee product. These products were then compared to soluble coffee samples derived wholly from either roasted Arabica and/or Robusta beans. See table 2.

The chlorogenic acid isomers were separated by high pressure liquid chromatography and detected by UV photometry. The antioxidant activity is given in "chlorogenic acid equivalents" (g/100g of the powdered product). The results are given in Table 2.

**Table 2**

| **Sample** | **Coffee Product (weight ratio of green:roasted)** | **Green coffee** | **Roasted Coffee** | **Colour (CTN)** | **Chlorogenic acids equivalent** |
|---|---|---|---|---|---|
| 10 | 0:100 | - | Arabica | 80 | *2.9* |
| 11 | 35:65 | Arabica | Arabica | 60 | 6.8 |
| 12 | 35:65 | Arabica | Arabica | 80 | 7.8 |
| 13 | 35:65 | Arabica | Arabica | 100 | 8.6 |
| 14 | 0:100 | - | 35/65 Mix* | 80 | *3.7* |
| 15 | 35:65 | Robusta | Arabica | 60 | 8.2 |
| 16 | 35:65 | Robusta | Arabica | 80 | 8.8 |
| 17 | 35:65 | Robusta | Arabica | 100 | 10.6 |

| | | | | | |
|---|---|---|---|---|---|
| * denotes 35% Arabica / 65% Robusta. | | | | | |

### Example 3

Soluble coffee products were prepared as follows:
Arabica and/or Robusta beans were roasted to various degrees and mixed with green Arabica and/or green Robusta beans. The roasted beans were then ground whereas green coffee beans were used in an unground form. The ground roasted coffee and the unground green coffee were blended and extracted using conventional techniques. The resulting products were dried to provide a soluble coffee product. These products were then compared to soluble coffee samples derived wholly from either roasted Arabica and/or Robusta beans.

The chlorogenic acid isomers were separated by high pressure liquid chromatography and detected by UV photometry. The antioxidant activity is given in "chlorogenic acid equivalents" (g/100g of the powdered product). The results are given in Table 3.

**Table 3**

| **Sample** | **Coffee Product (weight ratio of green:roasted)** | **Green coffee** | **Roasted Coffee** | **Colour (CTN)** | **Chlorogenic acids equivalent** |
|---|---|---|---|---|---|
| 18 | 0:100 | - | 35/65 Mix* | 80 | *3.7* |
| 19 | 35:65 | Robusta | Arabica | 80 | 8.5 |
| 20 | 35:65 | Robusta | Arabica | 90 | 9.7 |
| 21 | 35:65 | Robusta | Robusta | 80 | 2.2 |
| 22 | 35:65 | Robusta | Robusta | 85 | 7.6 |

| | | | | | |
|---|---|---|---|---|---|
| * denotes 35% Arabica / 65% Robusta. | | | | | |

## Claims

1. A coffee product comprising:
(i) a first portion consisting of unroasted ground or/and unground coffee, in an amount of from 1 to 90% by weight based on the total weight of the coffee product, and
(ii) a second portion consisting of ground coffee which has been roasted to a higher degree of roast than said first portion, in an amount of from 99 to 10% by weight based on the total weight of the coffee product,
wherein the content of chlorogenic acids is at least 4g per 100g of the coffee product.

2. A coffee product as claimed in claim 1 in which the weight ratio of (i) to (ii) is from 30:70 to 50:50.

3. A coffee product according to claim 1 in which the weight ratio of (i) to (ii) is from 37:63 to 42:58.

4. A coffee product according to any one of the preceding claims wherein the first portion is derived from decaffeinated coffee and the second portion is derived from, optionally decaffeinated, coffee.

5. A method of preparing a soluble coffee product comprising the steps of:
(A) providing a coffee product comprising
(i) a first portion consisting of unroasted ground or/and unground coffee, in an amount of from 1 to 90% by weight based on the total weight of the ground coffee composition, and
(ii) a second portion consisting of ground coffee which has been roasted to a higher degree of roast than said first portion, in an amount of from 99 to 10% by weight based on the total weight of the ground coffee composition,
(B) optionally stripping the aroma from the second portion to provide a first aroma portion and a stripped second portion,
(C) combining and co-extracting portion (i) and optionally stripped portion (ii)
(D) optionally stripping the aroma from the extract,
(E) optionally adding the first aroma portion to the, optionally stripped extract,
(F) optionally drying the extract,
so as to provide a soluble coffee composition having a content of chlorogenic acids of at least 8g per 100g of the soluble coffee product, based on an extraction level of 50% Ts.

6. A method of preparing a soluble coffee product comprising the steps of:
(A) providing a first portion consisting of unroasted coffee,
(B) optionally grinding the first portion,
(C) extracting the first portion to provide a first extract,
(D) Optionally drying the first extract
(E) providing a second portion consisting of coffee which has been roasted to a higher degree of roast than said first portion,
(F) grinding the second portion,
(G) optionally stripping the aroma from the second portion to provide a first aroma portion and a stripped second portion,
(H) extracting the optionally stripped second portion to provide a second extract,
(I) Optionally drying the second extract,
(J) combining the first and second extracts in the stoechiometric proportions of extracts so that the initial combined coffee blend would have been composed of 1 to 90% by weight of unroasted ground or/and unground coffee and 99 to 10% by weight of roasted ground coffee,
(K) optionally stripping the aroma from the combined extract, and
(L) optionally adding the first aroma portion to the, optionally stripped, combined extract
(M) optionally drying the extract
so as to provide a soluble coffee product having a content of chlorogenic acids of at least 8g per 100g of the soluble coffee product, based on an extraction level of 50% Ts.

7. Use of a coffee product as defined in any one of claims 1 to 4 which, when reconstituted to provide a coffee beverage, provides an increased amount of natural bio-available antioxidants to the body when consumed.

## Patentansprüche

1. Kaffeeprodukt, welches Folgendes umfasst:
(i) einen ersten Teil bestehend aus ungeröstetem, gemahlenem oder/und ungemahlenem Kaffee in einer Menge von 1 bis 90 Gew.-%, basierend auf dem Gesamtgewicht des Kaffeeprodukts, und
(ii) einen zweiten Teil bestehend aus gemahlenem Kaffee, der mit einem höheren Röstgrad als der erste Teil geröstet wurde, in einer Menge von 99 bis 10 Gew.-%, basierend auf dem Gesamtgewicht des Kaffeeprodukts,
wobei der Gehalt an Chlorogensäuren mindestens 4 g pro 100 g des Kaffeeprodukts beträgt.

2. Kaffeeprodukt nach Anspruch 1, bei dem das Gewichtsverhältnis von (i) zu (ii) im Bereich von 30:70 bis 50:50 liegt.

3. Kaffeeprodukt nach Anspruch 1, bei dem das Gewichtsverhältnis von (i) zu (ii) im Bereich von 37:63 bis 42:58 liegt.

4. Kaffeeprodukt nach einem der vorstehenden Ansprüche, wobei der erste Teil aus entkoffeiniertem Kaffee und der zweite Teil aus optional entkoffeiniertem Kaffee stammt.

5. Verfahren zur Zubereitung eines löslichen Kaffeeprodukts, das folgende Schritte umfasst:
(A) Bereitstellen eines Kaffeeprodukts, umfassend
(i) einen ersten Teil bestehend aus ungeröstetem, gemahlenem oder/und ungemahlenem Kaffee in einer Menge von 1 bis 90 Gew.-%, basierend auf dem Gesamtgewicht der gemahlenen Kaffeekomposition, und
(ii) einen zweiten Teil bestehend aus gemahlenem Kaffee, der mit einem höheren Röstgrad als der erste Teil geröstet wurde, in einer Menge von 99 bis 10 Gew.-%, basierend auf dem Gesamtgewicht der gemahlenen Kaffeekomposition,
(B) optional Abstreifen des Aromas vom zweiten Teil, um einen ersten Aromateil und einen abgestreiften zweiten Teil bereitzustellen,
(C) Kombinieren und Co-Extrahieren von Teil (i) und optional des abgestreiften Teils (ii),
(D) optional Abstreifen des Aromas vom Extrakt,
(E) optional Hinzufügen des ersten Aromateils zum optional abgestreiften Extrakt,
(F) optional Trocknen des Extrakts,
um eine lösliche Kaffeezusammensetzung mit einem Gehalt an Chlorogensäuren von mindestens 8 g je 100 g des löslichen Kaffeeprodukts, basierend auf einem Extraktionsgehalt von 50 % Gesamtfeststoffgehalt, herzustellen.

6. Verfahren zur Zubereitung eines löslichen Kaffeeprodukts, das folgende Schritte umfasst:
(A) Bereitstellen eines ersten Teils, bestehend aus ungeröstetem Kaffee,
(B) optional Mahlen des ersten Teils,
(C) Extrahieren des ersten Teils, um einen ersten Extrakt herzustellen,
(D) optional Trocknen des ersten Extrakts,
(E) Bereitstellen eines zweiten Teils, bestehend aus Kaffee, der mit einem höheren Röstgrad als der erste Teil geröstet wurde,
(F) Mahlen des zweiten Teils,
(G) optional Abstreifen des Aromas vom zweiten Teil, um einen ersten Aromateil und einen abgestreiften zweiten Teil bereitzustellen,
(H) Extrahieren des optional abgestreiften zweiten Teils, um einen zweiten Extrakt herzustellen,
(I) optional Trocknen des zweiten Extrakts,
(J) Kombinieren des ersten und zweiten Extrakts in den stöchiometrischen Verhältnissen von Extrakten, sodass die anfangs kombinierte Kaffeemischung aus 1 bis 90 Gew.-% ungeröstetem, gemahlenem oder/und ungemahlenem Kaffee und 99 bis 10 Gew.-% geröstetem, gemahlenem Kaffee besteht,
(K) optional Abstreifen des Aromas vom kombinierten Extrakt, und
(L) optional Hinzufügen des ersten Aromateils zum optional abgestreiften, kombinierten Extrakt,
(M) optional Trocknen des Extrakts,
um ein lösliches Kaffeeprodukt mit einem Gehalt an Chlorogensäuren von mindestens 8 g je 100 g des löslichen Kaffeeprodukts, basierend auf einem Extraktionsgehalt von 50 % Gesamtfeststoffgehalt, herzustellen.

7. Verwendung eines Kaffeeprodukts, wie in einem der Ansprüche 1 bis 4 definiert, das, wenn es rekonstituiert wird, um ein Kaffeegetränk herzustellen, dem Körper beim Konsumieren eine erhöhte Menge von natürlichen, biologisch verfügbaren Antioxidantien zur Verfügung stellt.

## Revendications

1. Produit de café comprenant :
(i) une première fraction constituée de café moulu et/ou non moulu non torréfié, en une quantité de 1 à 90 % en poids sur la base du poids total du produit de café, et
(ii) une seconde fraction constituée de café moulu qui a été torréfié à un degré de torréfaction supérieur par rapport à ladite première fraction, en une quantité de 99 à 10 % en poids sur la base du poids total du produit de café,
dans lequel la teneur en acides chlorogéniques est d'au moins 4 g pour 100 g de produit de café.

2. Produit de café tel que revendiqué dans la revendication 1, dans lequel le rapport pondéral de (i) à (ii) va de 30/70 à 50/50.

3. Produit de café tel que revendiqué dans la revendication 1, dans lequel le rapport pondéral de (i) à (ii) va de 37/63 à 42/58.

4. Produit de café selon l'une quelconque des revendications précédentes, dans lequel la première fraction est issue de café décaféiné et la seconde fraction est issue de café, éventuellement décaféiné.

5. Procédé de préparation d'un produit de café soluble comprenant les étapes consistant à :
(A) fournir un produit de café comprenant
(i) une première fraction constituée de café moulu et/ou non moulu non torréfié en une quantité de 1 à 90 % en poids sur la base du poids total de la composition de café moulu, et
(ii) une seconde fraction constituée de café moulu qui a été torréfié à un degré de torréfaction supérieur par rapport à ladite première fraction, en une quantité de 99 à 10 % en poids sur la base du poids total de la composition de café moulu,
(B) éventuellement épuiser l'arôme de la seconde fraction pour fournir une première fraction avec arôme et une seconde fraction épuisée,
(C) combiner et co-extraire la fraction (i) et la fraction (ii) éventuellement épuisée,
(D) éventuellement extraire l'arôme de l'extrait,
(E) éventuellement ajouter la première fraction avec arôme à l'extrait éventuellement épuisé,
(F) éventuellement sécher l'extrait,
de façon à fournir une composition de café soluble ayant une teneur en acides chlorogéniques d'au moins 8 g pour 100 g du produit de café soluble, sur la base d'un niveau d'extraction de 50 % Ts.

6. Procédé de préparation d'un produit de café soluble comprenant les étapes consistant à :
(A) fournir une première fraction constituée de café non torréfié,
(B) éventuellement moudre la première fraction,
(C) extraire la première fraction afin d'obtenir un premier extrait,
(D) éventuellement sécher le premier extrait,
(E) fournir une seconde fraction constituée de café qui a été torréfié à un degré de torréfaction supérieur par rapport à ladite première fraction,
(F) moudre la seconde fraction,
(G) éventuellement épuiser l'arôme de la seconde fraction pour fournir une première fraction avec arôme et une seconde fraction épuisée,
(H) extraire la seconde fraction éventuellement épuisée afin d'obtenir un second extrait,
(I) éventuellement sécher le second extrait,
(J) combiner les premier et second extraits dans les proportions stoechiométriques des extraits de sorte que le mélange de café combiné initial aurait été composé de 1 à 90 % en poids de café moulu et/ou non moulu non torréfié et de 99 % à 10 % en poids de café moulu torréfié,
(K) éventuellement épuiser l'arôme de l'extrait combiné,
(L) éventuellement ajouter la première fraction avec arôme à l'extrait combiné, éventuellement épuisé,
(M) éventuellement sécher l'extrait
de façon à fournir un produit de café soluble ayant une teneur en acides chlorogéniques d'au moins 8 g pour 100 g de produit de café soluble, sur la base d'un niveau d'extraction de 50 % Ts.

7. Utilisation d'un produit de café ainsi que défini dans l'une quelconque des revendications 1 à 4 lequel, quand il est reconstitué afin de fournir une boisson de café, apporte une quantité augmentée d'antioxydants naturels biodisponibles au corps quand il est consommé.
